Europäisches Patentamt

European Patent Office

Office européen des brevets

(11) Publication number: **0 136 511**
**A1**

# (12) EUROPEAN PATENT APPLICATION

(21) Application number: **84109945.0**

(22) Date of filing: **21.08.84**

(51) Int. Cl.⁴: **A 01 C 19/00**

(30) Priority: **22.08.83 AR 293969**

(43) Date of publication of application:
**10.04.85 Bulletin 85/15**

(84) Designated Contracting States:
**DE FR GB IT NL SE**

(71) Applicant: **A.P. Laursen A/S**
**Boegballe**
**DK-7171 Uldum(DK)**

(72) Inventor: **Fernandez, Hugo-José**
**Pringles 333**
**7500 Tres Arroyos Pcia. de Buenos Aires(AR)**

(74) Representative: **Vossius Vossius Tauchner Heunemann**
**Rauh**
**Siebertstrasse 4 P.O. Box 86 07 67**
**D-8000 München 86(DE)**

(54) Dispensing device for the distribution of granulated material on the fields.

(57) The dispensing device comprises a frame (6) mounted on a tractor (1), said frame (6) carries a hopper (2) for the granulated material, projects sideways with respect to the tractor (1) and has on its lower part at least one mounted conduct (5) longitudinally oscillating with respect to said frame (6). A mechanism producing the oscillating movement is connected to said conduct (5) and to the outlet of a power supply in the tractor (1). The inner lower part of said conduct presents a plurality of cuneiform crests (14) equidistantly spaced along the conduct (5) while a plurality of delivery holes (15) for the granulated material are equidistantly spaced along said lower part of the conduct (5) and in at least some of the areas between crests (14).

EP 0 136 511 A1

./...

Fig. 1

## DISPENSING DEVICE FOR THE DISTRIBUTION
## OF GRANULATED MATERIAL ON FIELDS

The present invention refers to a dispensing device used for the distribution of granulated material on fields, especially for the distribution of agrochemical compounds and other similar compounds. The dispensing apparatus and devices corresponding to the present state of the art are, in general, based on the use of rotating mechanisms or pneumatic assemblies. The first ones operate according to the well-known method of scattering and employ revolving blades or turbofans which scatter the material within a given radius. The latter use more complex machinery, although the apparatus is essentially composed of blades or similar elements placed at both sides of an automotive vehicle, like a tractor. Said blades are driven by compressed air and the granules of material hit against said elements and are scattered around in a manner similar to that produced by the previously mentioned devices.

Of these mechanisms, the second is highly expensive and requires using complex and relatively sophisticated equipment which needs careful maintenance. Also, both methods are subject to climatic factors which, in some cases, can conspire against them. Those climatic factors are, in particular, wind and rain which impede a uniform and continuous distribution of the material on the fields.

The present invention provides a solution for those and other disadvantages as it supplies a device which operates in spite of those climatic factors and also presents a simple and inexpensive structure requiring minimum maintenance.

To that effect, and according to the present invention, the dispensing device for the distribution of granulated material on the fields is of a type comprising a frame mounted on a tractor, said frame carrying a hopper for the granulated material, characterized in that said frame projects sideways with respect to the tractor and has on its lower part at least one mounted conduct longitudinally oscillating with respect to said frame and connected, by means of a flexible sleeve, to the delivery mouth of said hopper; and said mechanism producing the oscillating movement is connected to said conduct and to the outlet of a power supply in the tractor; the inner lower part of said conduct presents a plurality of cuneiform crests equidistantly spaced along the conduct and with their respective gradients oriented towards the end of the conduct farthest from the tractor; while a plurality of delivery holes for the granulated material are equidistantly spaced along said lower part of the above-mentioned conduct and in at least some of the areas between crests.

Therefore, the grains of material to be distributed are discharged from the hopper to the conduct through the flexible sleeve and, at the same time, said conduct is driven by the mechanism producing the oscillating movement according to a longitudinal seesaw movement typical of the translation course of the tractor. As a consequence, and by the action of the crests, the granulated material flows along the conduit while, due to gravity, it is discharged through the above-mentioned holes and therefore the material is uniformly distributed on the field area covered by the conduct. In other words, this uniform distribution is produced thanks to the uniform distribution of the material in the inner side of the conduct with the help of said cuneiform crests.

From the above the mechanical and functional simplicity of the device claimed as well as its independence with respect to the climatic factors are clearly understood because the material is not subject to their action until it is directly discharged to the field. It is also evident that both the distance to the ground and the number of active delivery holes in the conduct can be regulated according to the different requirements at the moment of the application. Those requirements include the above-mentioned climatic factors when they can conspire against a successful operation as can, for example, wind or rain. These and other improvements characteristic of the present invention shall be discovered in the following description, in conjunction with the enclosed drawings which show a preferred (but not the only) embodiment of the invention, and where:

Fig. 1 is a partial view of the device mounted on a tractor;

Fig. 2 is a partial cross-section of the device and its driving mechanism;

Fig. 3 shows a cross-section of the dispensing conduct;

Fig. 4 is a top view of the open conduct;

Fig. 5 shows a portion of the lower part of the conduct together with the device that regulates the discharge of material;

Fig. 6 is another view of Fig. 5; and

Fig. 7 shows the device of the present invention provided with two symmetrical dispensers.

In all the above-mentioned figures, the same reference numbers correspond to the same or equivalent parts.

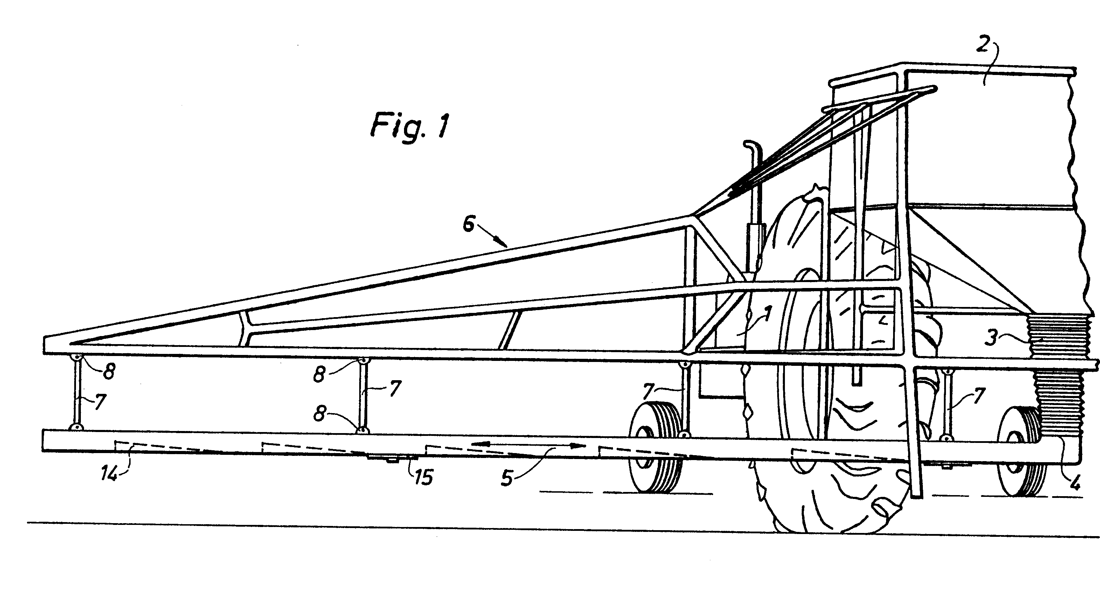

Referring now to Fig. 1, it shows a conventional tractor 1 with a hopper 2 mounted on its rear, said hopper having the shape of a funnel and leading to a flexible sleeve 3 connecting said hopper 2 to an inlet hole 4 of an elongated conduct 5. This conduct 5 is placed in the lower part of a frame or bracket generically shown as 6, extending cross-sectionally with respect to the longitudinal axis of the tractor, said conduct 5 is colineally placed with respect to the frame or bracket 6 and oscillatingly suspended from it by means of a plurality of arms 7 mounted on hinges 8 placed on the lower part of the frame 6 and the upper part of the conduct 5, allowing the latter to oscillate longitudinally with respect to the frame or bracket 6, that is, transversely or cross-sectionally with respect to the translation course of the tractor 1, as shown by the double arrow included in the figure.

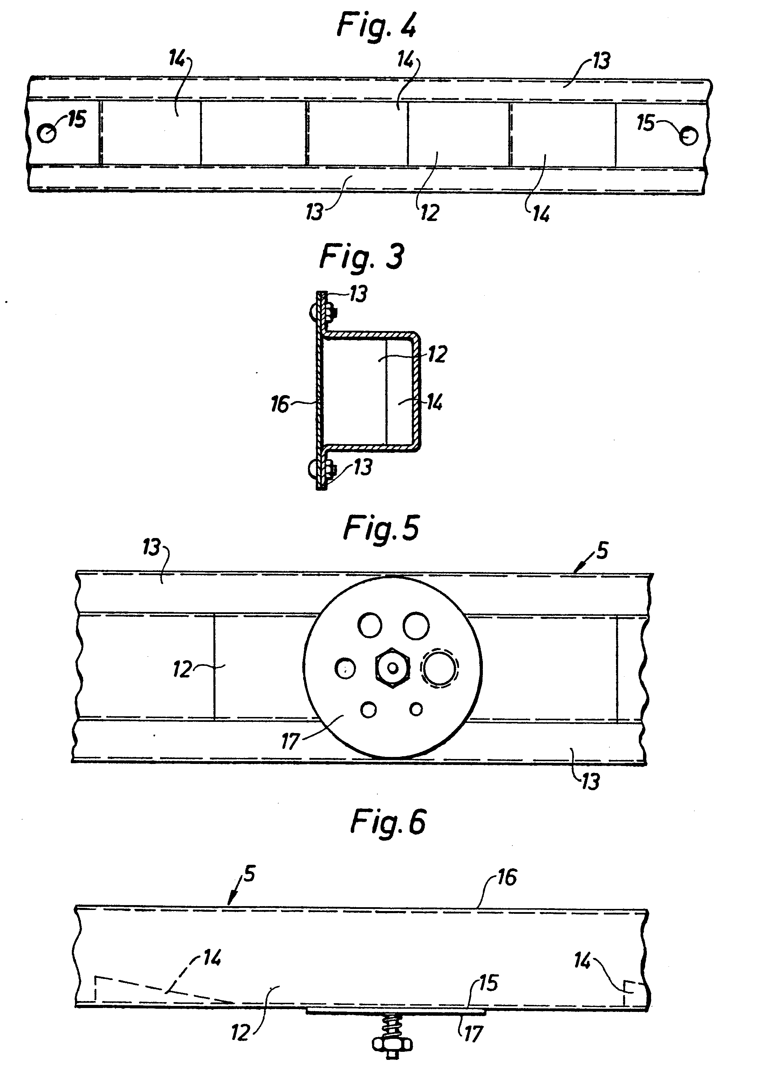

Referring now to Fig. 2, it shows in detail the inner part of conduct 5, with arrows illustrating the movement thereof and the path of the granulated material inside the conduct when the latter is mechanically actuated.

The actuation means of conduct 5 can be any appropriate means coupled to the power supply 9 of tractor 1. In the embodiment shown, a rod and crank mechanism is used, comprising an eccentric 10 and a rod 11 articulately associated to conduct 5 and able to generate on it a linear oscillatory movement.

Conduct 5 can be of any adequate material, or combination thereof. In the present embodiment, conduct 5 is made of a channel 12 of iron sheet - it can also be made of synthetic molded resin - having on its edges two external and longitudinal fins 13 as is clearly seen in Figs. 3 and 4. Equidistantly spaced along the bottom of said channel 12 there are substantially cuneiform crests 14, the respective gradients of which are oriented towards the end of the conduct coupled to the hopper 2, that is to the inlet 4 for the granulated material. In this embodiment, the height of the crests is approximately 1/3 of the depth of channel 12 but it must be clear that this relation is only a preferred example.

In the bottom of said channel 12 there are also a series of holes 15 placed in the spaces between two adjacent crests 14 and separated one from the other by a determined number of said crests. These holes constitute the discharge means through which the granulated material falls to the ground and, as will later be explained, they can be supplied with a diameter regulating device as well as with eventual selective sealing means. The conduct 5 also has a lid 16 removably attached to fins 13 by appropriate means and said lid has on its outer surface mounting elements 8 for arms 7 pivoting on the frame.

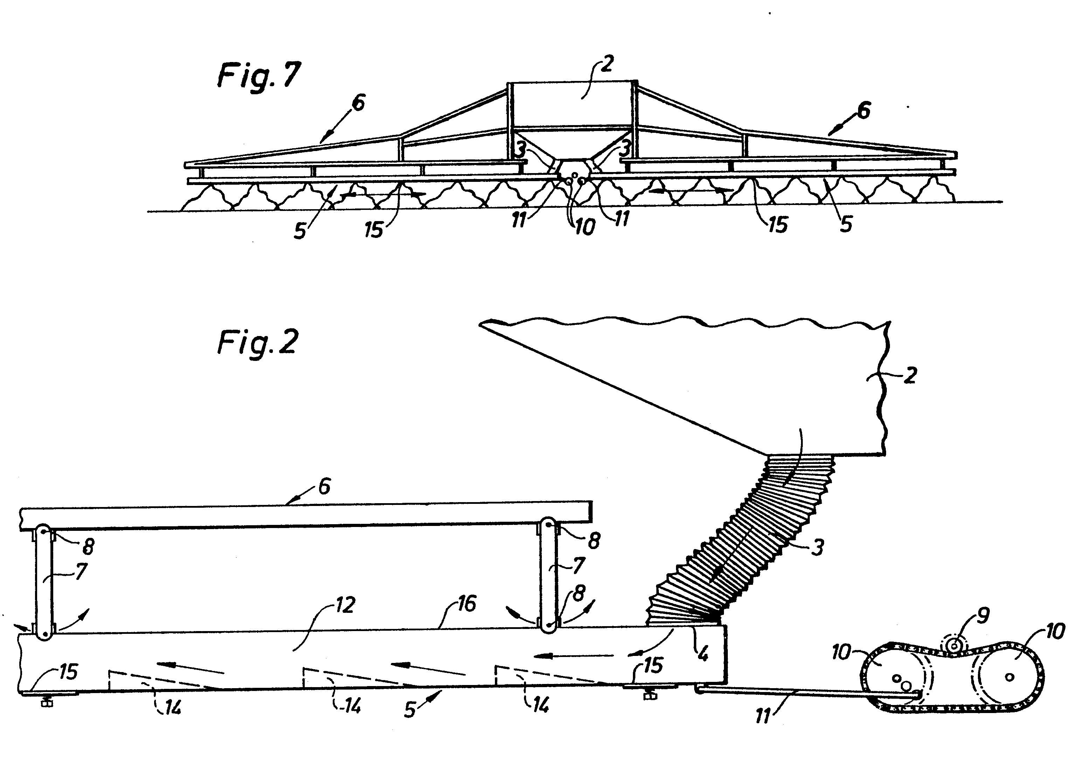

The diameter regulating and sealing device of holes 15 is shown in Figs. 5, 6 and 7 and is of the conventional type comprising a revolving disk 17 externally mounted on the lower surface of the conduct 5 and provided with a plurality of equidistant holes of different diameter, the bigger hole having a diameter substantially equal to that of holes 15 in conduct 5. Said disk is subject to the action of a compression spring which adjusts it to the outer surface of conduct 5. Therefore and in order to regulate the size of the discharge outlets of said conduct, it is only necessary to select the diameter on said disk and make it coincide with holes 15 of conduct 5. Also, in order to seal a hole 15, said disk may have a blind area, that is, without holes. Finally, Fig. 7 shows a preferred embodiment of the invention, in which two devices of the type described in the invention are placed symmetrically at both sides of the tractor, therefore allowing a perfect covering of the area and specially useful for big fields. It is also important to notice that the length of conduct 5 is only limited by the tractor's ability to carry an adequate hopper and a frame or bracket proportional to the desired length of the conduct.

The operation of the apparatus can be clearly seen from its structural characteristics. When the mechanism actuating oscillatingly conduct 5 is started and the delivery mouth of hopper 2 is opened, the granulated material falls into the conduct following the direction shown by the arrows in Fig. 2 and flows through the conduct by means of the gradients of the cuneiform crests 14 due to the oscillating movement provided by said mechanism, said movement also allows the material to climb the gradients of said crests, therefore originating a practically continuous flow of the material from one end to the other of conduct 5. When the granulated material arrives to one discharge hole 15, through it falls a desired quantity of material according to the diameter of the hole while the remaining material continues flowing through conduct 5 until it is completely full, therefore reaching the normal status of the device, with a continuous discharge of granulated material through all the holes of

the conduct.

CLAIMS:

1.       Dispensing device for the distribution of granulated material on the fields, of the type comprising a frame mounted on a tractor and said frame carrying a hopper containing the granulated material, characterized in that

said frame projects sideways with respect to the tractor and has on its lower part at least one oscillating conduct longitudinally mounted with respect to said frame and connected, by means of a flexible sleeve, to the delivery hole of said hopper;

the mechanism which produces the oscillating movement  is connected to said conduct and to the outlet of a power supply in the tractor;

the lower inner part of said conduct showing a plurality of cuneiform crests equidistantly spaced along the conduct and the respective gradients of which are oriented towards the end of the conduct farthest from the tractor;

while a plurality of delivery holes for the granulated material are equidistantly spaced along said lower part of said conduct and in at least some of the spaces between crests.

2.       Device according to claim 1, characterized in that said frame is formed by at least one bracket projecting sideways with respect to the tractor and said conduct is mounted on the lower part of said bracket by means of a plurality of arms fixed in an articulate way and longitudinally with respect to the bracket.

3. Device according to claims 1 and 2, characterized in that it comprises two brackets projecting sideways of said tractor and in that said hopper is placed between them and has two delivery holes, each one of them connected to their respective oscillating conducts.

4. Device according to any of claims 1 to 3, characterized in that said flexible sleeve is a blower tube.

5. Device according to any of claims 1 to 4, characterized in that said mechanism producing the oscillating movement is a rod and crank mechanism.

6. Device according to any of claims 1 to 5, characterized in that said conduct is formed by a channel with a lid removably fixed thereto and which carries the articulated mounting elements for said arms.

7. Device according to claim 6, characterized in that said channel comprises two external longitudinal fins to which is removably fixed said lid.

8. Device according to any of claims 1 to 7, characterized in that it comprises a diameter selecting device and a sealing device mounted in relation to the discharge holes for the granulated material provided in said conduct.

Fig. 1

## Fig. 4

## Fig. 3

## Fig. 5

## Fig. 6

Fig.7

Fig.2

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int Cl 4) |
| A | DE-A-1 607 390 (N.V. PHILIPS'GLOEILAMPENFABRIEKEN) * Claims, figures * | 1,2,5 | A 01 C 19/00 |
| A | DE-C- 424 424 (J. JENSEN et al.) * Complete document * | 1 | |
| A | DE-B-2 052 013 (LICENTIA PATENT-VERWALTUNGS-GMBH) * Claims, figures * | 1,2 | |
| A | CH-A- 333 813 (C. VAN DER LELY N.V.) * Page 5, line 67 - page 6, line 31; figures 5, 6 * | 1,2 | |

TECHNICAL FIELDS SEARCHED (Int. Cl.4)

A 01 C 7/00
A 01 C 15/00
A 01 C 19/00

The present search report has been drawn up for all claims

| Place of search BERLIN | Date of completion of the search 08-11-1984 | Examiner WUNDERLICH J E |
|---|---|---|